# EUROPEAN PATENT SPECIFICATION

(11) **EP 1 320 293 B1**
(45) Date of publication and mention of the grant of the patent: **30.06.2004**
(21) Application number: 01969301.9
(22) Date of filing: 26.09.2001
(51) Int. Cl.: A01K 75/00

(54) **METHOD FOR THE MANUFACTURE OF A PREFABRICATED FISHING NET OF THE TRAMMEL NET TYPE AND A TRAMMEL NET MANUFACTURED IN ACCORDANCE THEREWITH**
VERFAHREN ZUR HERSTELLUNG EINES VORGEFERTIGTEN FISCHNEZZES DER DREIWANDBAVART UND EIN NACH DIESEM VERFAHREN HERGESTELLTES DREIWANNETZ
PROCEDE DE FABRICATION D'UN FILET PREFABRIQUE DE TYPE TRAMAIL, ET TRAMAIL RESULTANT

(30) Priority: 29.09.2000 DK 200001439
(43) Date of publication of application: 25.06.2003
(73) Proprietor: Daconet A/S, 7800 Skive (DK)
(72) Inventor: DAHL, Ole, DK-7800 Skive (DK)
(74) Representative: Nielsen, Leif L.
(86) International application number: PCT/DK2001/000611
(87) International publication number: WO 2002/026032

(56) References cited:
- FR-A1- 2 682 261
- FR-A1- 2 729 821
- FR-A1- 2 733 390

## Description

The present invention concerns a method of producing a prefabricated fishing net of the trammel net type, of the kind which comprises an inner net with an edge mesh line, and where said inner net is disposed in between wall meshes.

The invention also concerns a fishing net of the trammel net type produced by means of the method according to the invention.

Such prefabricated fishing nets are known as an inner net which is disposed between wall meshes with greater mesh size than the inner net, where the wall meshes and the inner net are sewn together by a hand-tied half-mesh at the top and bottom. However, the knots which join the inner net and the wall meshes together with the half mesh will often slip, which is not desirable.

With the use of the prefabricated fishing net for the production of fishing nets of the trammel net type which are actually ready for use, the upper side of the net is provided with a head rope consisting of a reinforcement line drawn through the half-mesh, and an associated float line which at points is sewn firmly to the reinforcement line, and the underside of the net is provided with a foot rope which consists of a follower line which is drawn through the half-meshes, and in association herewith a sink-line which at points is sewn firmly to the follower line. It must be mentioned, however, that in certain cases the upper and lower head and foot ropes respectively consist merely of a float line inserted in the uppermost mesh row and a sink-line inserted in the lowermost mesh row of the fishing net, where said float line and sink line are sewn/lashed firmly to the outermost mesh rows.

From FR A 2 682 261, which is an improvement of the hitherto-known prefabricated fishing net of the trammel type, it is known to connect the wall meshes and the inner net with a water-soluble tape. This results in a cheaper production of the prefabricated trammel net, in that the presence of the tape will ease the handling of the nets in connection with the mounting of the head and foot ropes, and the wall meshes and the inner net, where the tape is mounted, gather the meshes so that these are not displaced in relation to each other.

With the use of this prefabricated fishing net for the production of actually ready-to-use fishing nets of the trammel type, the upper-side of the net is provided with a head rope consisting of a reinforcement line drawn through the meshes of the inner net and the wall meshes, and a float line associated herewith which at points is sewn firmly to the reinforcement line, and the underside of the net is provided with a foot rope which consists of a follower line which is drawn through the meshes of the inner net and the wall meshes, and an associated sink line which at points is sewn firmly to the follower line. The advantage herewith, when the tape is dissolved in the water, is that the wall meshes can hereby slide freely forwards and backwards respectively over the reinforcement line and the follower line in the finished mounted trammel net, even though the net hangs fast in the sea bottom or is drawn crooked when hauled up.

From FR A 2 733 390 there is known a prefabricated trammel net where the wall meshes are mutually connected by a small triangular net consisting of a small piece of thin mono-strand line, the ends of which are lashed firmly to the wall meshes along the upper and lower edges of the net. Said triangular net serves to ease the handling of the wall meshes in connection with the bringing of the inner net between the wall meshes, where the reinforcing line and the follower line are drawn respectively through the edge meshes of the inner net and the wall meshes. Like the principles of the trammel net according to FR A 2 682 261, the intention is that the wall meshes shall be able to slide freely forwards and backwards respectively over the reinforcement line and the follower line, which means that it is the intention that the small triangular net shall break relatively quickly after the net is taken into use, which means that the lashing together of the wall meshes with the mono-strand line thus serves only as an aid in the mounting of the net.

A further prefabricated trammel net is known from FR A 2 729 821, where the inner net and the wall meshes are drawn on to the same edge mesh twine, where the edge mesh twine is drawn through the edge meshes of the inner net, and where the wall nets are secured to the edge mesh twine on which loops are made by means of hand-tied twine around a bight on the edge mesh twine in which the wall net hangs. This method of manufacture of a trammel net gives rise to insufficient flexibility, especially when seen in the light that many fishermen have their own ideas concerning a suitable mounting length for a trammel net, and the loops result in a quite considerable restriction in the freedom of choice for the fisherman, in that by and large the mounting length is determined by the mutual distance between the loops.

Since both the mounting of the tape cf. FR A 2 682 261 and the lashing of the mono-strand line around the wall meshes cf. FR A 2 733 390, which constitutes the finished sewn and mounted trammel net, or the securing of the wall nets in loops formed by hand-tied bights on the edge mesh twine cf. FR A 2 729 821, further result in cost-increasing extra operations in connection with the production of the prefabricated net, and yet have no practical significance for the finished product, or have a restricting effect on the choice of the mounting length, it will be expedient to find an alternative to the above-mentioned prefabricated trammel net which could result in a rationalisation of the production method, and herewith a net which is cheaper to produce.

With the invention, the possibility has been realised of achieving a simplification of the production method for prefabricated trammel nets of the type disclosed by drawing the wall meshes on the edge mesh twine of the inner net.

With the invention, use is made of the fact that all types of fishing nets are provided along two sides with an edge mesh twine which is inserted in the outermost row of the meshes before the net can be sent further for actual mounting, i.e. the sewing on of the upper and lower head and foot ropes. The twine is necessary in order to be able mount the net correctly and quickly on the sewing machine. With the invention, this twine is thus also used as a control means for the mutual distances of the wall meshes between the meshes of the inner net.

With the method according to the invention, there is thus achieved a prefabricated trammel net which is very easy to provide with head and foot ropes, in that the edge mesh twine controls the mutual positioning of the inner net and the wall meshes in the mounting of the prefabricated trammel net on the sewing machine. In addition to the savings achieved hereby in the production process in relation to the known trammel nets, there is also achieved full flexibility with regard to the mounting length in comparison with the trammel net disclosed in FR A 2 729 821.

With the method it is preferred that the wall nets are drawn on to the edge mesh twine of the inner net in such a manner that the edge mesh twine is drawn through the outermost row of the mesh in the wall nets.

With the method it is also preferred that the edge mesh twine is inserted in the outermost row of the mesh in the inner net.

A trammel net of the type disclosed is characterised in that the wall meshes are drawn on to the edge mesh twine of the inner net.

Particularly preferred embodiments of the trammel net are disclosed in the claims 5 and 6.

In the following, the invention is explained in more detail with reference to the drawing, where
- fig. 1: is a front view of a section of a prefabricated trammel net according to the invention, and
- fig. 2: is a sectional view of the trammel net shown in fig. 1.

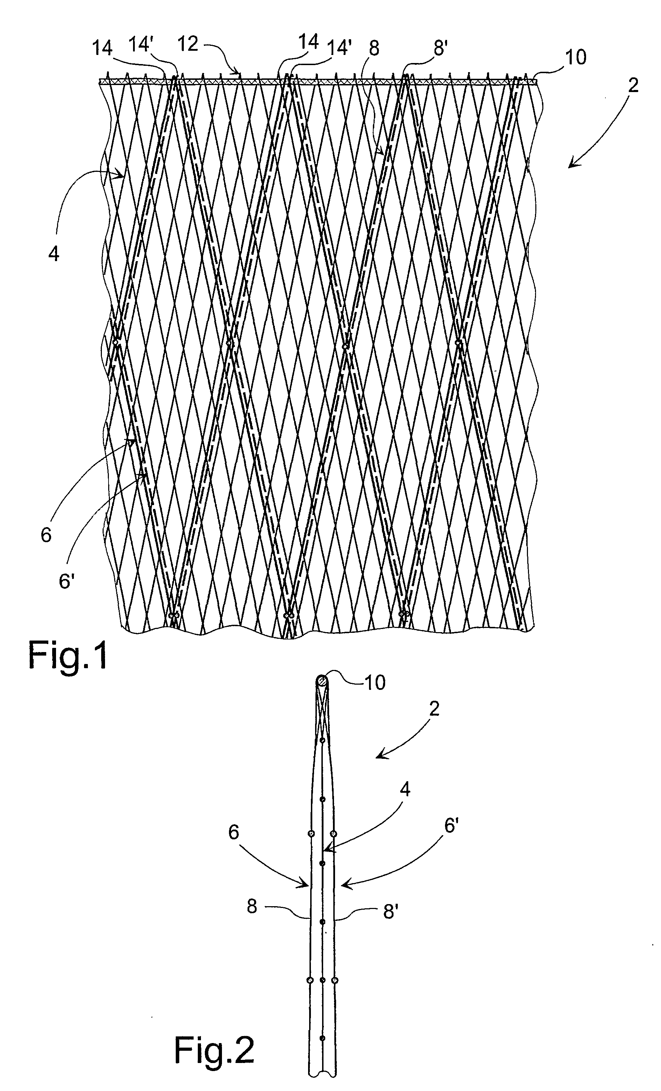

In fig. 1 and fig. 2 there is seen an embodiment of a section of a prefabricated trammel net 2 according to the invention seen from the front. The trammel net 2 consists of an inner net 4 with a mesh size which is less than the mesh size of a first and a second layer of wall meshes 6, 6' which are disposed on each side of the inner net 4. As will appear from fig. 1, the wall meshes 6, 6' are disposed so that the lines 8, 8' in the meshes and the knots are placed opposite each other. The inner net 4 has an edge mesh twine 10 which is inserted respectively through the outermost mesh row 12 of the inner net and through the outermost mesh row 14, 14' of the wall meshes.

With this positioning of the edge mesh twine 10, it will be relatively easy to insert the prefabricated trammel net on the tube in a fishing-net sewing machine for mounting of the head and foot ropes (not shown), so that the wall meshes can slide freely forwards and backwards respectively over the reinforcement line and the follower line in the same way as with the known trammel net.

With the prefabricated trammel net, there is thus provided a product which distinguishes itself by being cheaper to produce than the known prefabricated trammel net, in that the trammel net according to the invention renders the presence of tape, lashing or triangular meshes for mutual control of the wall mesh edges in the mounting of the inner net superfluous. Moreover, this is achieved completely without any auxiliary means apart from the edge mesh twine which is necessary for all types of fishing nets, including the prefabricated trammel nets.

## Claims

1. Method for the production of a prefabricated fishing net of the trammel net type, of the kind which comprises an inner net (4) with an edge mesh twine (10), and where said inner net (4) is placed between wall meshes (6, 6'), **characterised in that** the wall meshes (6, 6') are drawn on the edge mesh twine (10) of the inner net (4), using the edge mesh twine (10) as control means for the mutual distances of the wall meshes (6, 6') between the meshes of the inner net (4), without using any auxiliary means apart from the edge mesh twine (10).

2. Method according to claim 1, **characterised in that** the wall meshes (6, 6') are drawn on the edge mesh twine (10) of the inner net, so that the edge mesh twine (10) is drawn through the outermost mesh row (14, 14') of the wall meshes.

3. Method according to claim 1 or 2, **characterised in that** the edge mesh twine (10) is inserted in the outermost mesh row (12) of the inner net.

4. Trammel net (2) comprising an inner net (4) with an edge mesh twine (10), and where said inner net (4) is placed between wall meshes (6, 6'), **characterised in that** the wall meshes (6, 6') are drawn onto the edge mesh twine (10) of the inner net (4), so that the edge mesh twine (10) controls the mutual positioning of the inner net and the wall meshes (6, 6').

5. Trammel net (2) according to claim 4, **characterised in that** the wall meshes (6, 6') are drawn onto the inner net's edge mesh twine (10), so that the edge mesh twine (10) is drawn through the outermost mesh row (14, 14') of the wall meshes.

6. Trammel net according to claim 4 or 5, **characterized in that** the edge mesh twine (10) is inserted in the outermost mesh row (12) of the inner net.

## Patentansprüche

1. Verfahren zur Herstellung eines vorgefertigten Fischnetzes der Trammelnetzart, von der Art, die ein inneres Netz (4) mit einem Randmaschenbindfaden (10) umfaßt, und wobei das genannte innere Netz (4) zwischen Wandmaschen (6,6') angebracht ist, **dadurch gekennzeichnet, daß** die Wandmaschen (6,6') auf den Randmaschenbindfaden (10) des inneren Netzes (4) gezogen werden, wobei der Randmaschenbindfaden (10) als Kontrolmittel für den gegenseitigen Abständen der Wandmaschen (6,6') zwischen den Maschen des inneren Netzes (4) verwendet wird, ohne die Anwendung von jeglichen Hilfsmitteln außer dem Randmaschenbindfaden (10).

2. Verfahren nach Anspruch 1, **dadurch gekennzeichnet, daß** die Wandmaschen (6,6') auf den Randmaschenbindfaden (10) des inneren Netzes gezogen werden, so daß der Randmaschenbindfaden (10) durch die äußerste Maschenreihe (14,14') der Wandmaschen gezogen wird.

3. Verfahren nach Anspruch 1 oder 2, **dadurch gekennzeichnet, daß** der Randmaschenbindfaden (10) in die äußerste Maschenreihe (12) des inneren Netzes eingesetzt wird.

4. Trammelnetz (2), das ein inneres Netz (4) mit einem Randmaschenbindfaden (10) umfaßt, und wo das genannte innere Netz (4) zwischen Wandmaschen (6,6') angebracht ist, **dadurch gekennzeichnet, daß** die Wandmaschen (6,6') auf den Randmaschenbindfaden (10) des inneren Netzes (4) gezogen werden, so daß der Randmaschenbindfaden (10) die gegenseitige Positionierung von dem inneren Netz und den Wandmaschen (6,6') kontrolliert.

5. Trammelnetz (2) nach Anspruch 4, **dadurch gekennzeichnet, daß** die Wandmaschen (6,6') an dem Randmaschenbindfaden (10) des inneren Netzes gezogen werden, so daß der Randmaschenbindfaden (10) durch die äußerste Maschenreihe (14,14') der Wandmaschen gezogen wird.

6. Trammelnetz nach Anspruch 4 oder 5, **dadurch gekennzeichnet, daß** der Randmaschenbindfaden (10) in die äußerste Maschenreihe (12) des inneren Netzes eingesetzt wird.

## Revendications

1. Procédé de production d'un filet de pêche préfabriqué du type tramail, du type comprenant un filet intérieur (4) avec des mailles de bord retorses (10), et dans lequel le filet intérieur (4) est placé entre des mailles formant parois (6, 6'), **caractérisé en ce que** les mailles formant parois (6, 6') sont étirées sur les mailles de bord retorses (10) du filet intérieur (4) en utilisant ces mailles de bord retorses (10) comme moyens de contrôle des distances mutuelles des mailles formant parois (6, 6') entre les mailles du filet intérieur (4), sans utiliser de moyen auxiliaire, à l'exception des mailles de bord retorses (10).

2. Procédé selon la revendication 1, **caractérisé en ce que** les mailles formant parois (6, 6') sont étirées sur les mailles de bord retorses (10) du filet intérieur de telle sorte que les mailles de bord retorses (10) soient étirées à travers la rangée de mailles la plus extérieure (14, 14') des mailles formant parois.

3. Procédé selon la revendication 1 ou 2, **caractérisé en ce que** les mailles de bord retorses (10) sont insérées dans la rangée de mailles la plus extérieure (12) du filet intérieur.

4. Tramail (2) comprenant un filet intérieur (4) comportant des mailles de bord retorses (10), et dans lequel le filet intérieur (4) est placé entre des mailles formant parois (6, 6'), **caractérisé en ce que** les mailles formant parois (6, 6') sont étirées sur les mailles de bord retorses (10) du filet intérieur (4) de telle sorte que les mailles de bord retorses (10) contrôlent le positionnement mutuel du filet intérieur et des mailles formant parois (6, 6').

5. Tramail (2) selon la revendication 4, **caractérisé en ce que** les mailles formant parois (6, 6') sont étirées sur les mailles de bord retorses (10) du filet intérieur de telle sorte que les mailles de bord retorses (10) soient tirées à travers la rangée de mailles la plus extérieure (14, 14') des mailles formant parois.

6. Tramail selon la revendication 4 ou 5, **caractérisé en ce que** les mailles de bord retorses (10) sont insérées dans la rangée de mailles la plus extérieure (12) du filet intérieur.
